# EUROPEAN PATENT APPLICATION

(11) **EP 2 670 217 A1**
(43) Date of publication of application: **04.12.2013**
(21) Application number: 13002825.1
(22) Date of filing: 31.05.2013
(51) Int. Cl.: H05B 33/08

(54) **Apparatus for controlling LED string**

(30) Priority: 01.06.2012 TW 101119651
(71) Applicant: Jinone Incorporation, Hsinchu City 30070 (TW)
(72) Inventor: Wang, Hung-Tsung, 30070 Hsinchu City (TW); Lan, Yao-Hui, 30070 Hsinchu City (TW); Peng, Yuan-Yu, 30070 Hsinchu City (TW)
(74) Representative: Jehle, Volker Armin

(57) **Abstract**

The present invention provides an apparatus for controlling an LED string. In the apparatus, each high voltage (HV) N-type device has one end electrically connected or coupled with the corresponding LED unit and the other end coupled with a corresponding low voltage (LV) current limit switch via a corresponding path. The LV current limit switch is switched according to the voltage or current detected on the path. Since the current flowing through the HV N-type device increases or decreases with that flowing through the corresponding LV current limit switch, the HV N-type device will be indirectly controlled.

## Description

The present invention provides an apparatus for controlling an LED string. In the apparatus, each high voltage (HV) N-type device has one end electrically connected or coupled with the corresponding LED unit and the other end coupled with a corresponding low voltage (LV) current limit switch via a corresponding path. The LV current limit switch is switched according to the voltage or current detected on the path. Since the current flowing through the HV N-type device increases or decreases with that flowing through the corresponding LV current limit switch, the HV N-type device will be indirectly controlled.

### BACKGROUND OF THE INVENTION

### 1. Field of the Invention

The present invention relates to an apparatus for controlling an LED string, and particularly to an apparatus including one or more low voltage (LV) current limit switch(es) and the corresponding high voltage (HV) N-type device(s). The apparatus can perform higher electricity efficiency and be manufactured with lower costs because of simpler circuit layout. Further, 120 Hz flicker of the LED string can be effectively reduced.

### 2. Related Prior Arts

The long HV LED string is now a trend in lighting. Therefore, some apparatuses or methods about controlling the HV LED string are provided, for example, U.S. Patent Numbers 6,989,807, 7,439,944 and 7,081,722. However, it's still necessary to improve the switching timing and the fixed current used for driving the circuits.

In order to modifying the above disadvantages, Taiwan Patent Publication No. 201134293 (or U.S. Patent Publication No. 20120056559) provides an integrated circuit for driving high voltage LED lamp. As shown in FIGs. 1 and 4 of this patent, the integrated circuit includes a plurality of current-clamping units and each of which includes an HV MOS. By turning on and off the current-clamping units to switch the LEDs, power factor correction (PFC) increases and total harmonic distortion (THD) decreases. However, for the HV MOS manufactured in different processes and temperatures, conduction voltages thereof will be different and thus the alternate time and current are difficultly controlled. As a result, the instantaneous current for conducting the LED could be over high or no current flowing through for a long time, and thus flicker occurs. The total current will be discretely open and the instantaneous current is over high.

120 Hz ripple is usually observed in a long LED string driven by traditional methods due to the conduction time difference between the first few LEDs and the last few. In addition, the efficiency is also not satisfying. Though increasing more control nodes can promote the efficiency, the manufacturing cost will increase, too.

In order to overcome the above disadvantages, the present invention provides an apparatus for controlling an LED string to promote the output power with lower electromagnetic interference (EMI).

### SUMMARY OF THE INVENTION

The object of the present invention is to provide an apparatus for controlling an LED string which can decrease noises and be manufactured with lower costs because of simpler circuit layouts.

The LED string of the present invention can be grounded or ungrounded and includes a plurality of LED units in series. Each of the LED units can include one or several LED(s) arranged in series or in parallel.

The apparatus for controlling an LED string primarily includes a plurality of HV N-type devices and a plurality of LV current limit switches. When describing this invention, the apparatus for controlling an LED string is briefly named as the control apparatus or the apparatus, the HV N-type device is briefly named as the HV device and the LV current limit switch is briefly named as the LV switch. Each of the HV devices electrically connects to a current output of the corresponding LED unit. Each of the LV switches electrically connects to the corresponding HV device in series and electrically connects to the corresponding LED unit in parallel. A current flows from the HV device to the corresponding LV switch. The terms "HV" and "LV" are defined relatively according to the breakdown voltages of the devices or the switches.

Accordingly, a conduction current flowing through the HV device will increase or decrease with that flowing through the corresponding LV switch.

The N-type device is preferably a metal-oxide-semiconductor (MOS) transistor or a bi-polar transistor, but other switches suitable for the apparatus of the present invention are usable. The bi-polar transistor is preferably an NPN-type transistor.

For the apparatus of the present invention, when input currents of the LV switches increase, the LV switch at the lowest working voltage will be turned on. Then the conduction currents flowing through the other LV switches at higher working voltages and their corresponding HV devices will decrease. Alternatively, the conduction current flowing through the LV switch at higher working voltage and the corresponding HV device will decrease when receiving a signal (or command) "decreasing current" from the LV switch at lower working voltage.

The apparatus can further include at least one master-slave controller for judging if the LV switch should be turned on or off or the current flowing through it should be decreased. The master-slave controller can be external to or built in the LV current limit switch. The master-slave controller can also send a signal to the LV switch for turning on/off or decreasing the current thereof. In addition to the master-slave controller, other circuits capable of achieving these purposes can be used. According to the present invention, conduction current of the LV switches at higher working voltages will be controlled by the LV switches at lower working voltages.

Furthermore, along a path (or a wire) from the LED unit to the corresponding LV switch, the voltage (or current) can be detected by a voltage (or current) detecting circuit. When the detected voltage (or current) is larger than a predetermined value, the corresponding LV switch will be turn off. In contrast, when the detected voltage or current is less than a predetermined value, the corresponding LV current limit switches will be turned on.

Traditionally, monolithic chips including HV devices and LV devices both having lateral currents are used. In the present invention, "vertical" HV devices are used in the apparatus. The vertical device has a lower conduction resistance than the lateral since the current flows from the back (drain) to the front (source and gate). Therefore, the cost for manufacturing the apparatus of the present invention can be effectively reduced.

In the specification, the term "electrically connect" (or briefly as "connect") indicates electrical coupling or electrical conduction by direct or indirect connection between devices, contacts, inputs, outputs, etc.

### BRIEF DESCRIPTION OF THE DRAWINGS

FIG. 1 shows the first embodiment in which the HV NMOS and LEDs are controlled by the LV switches.
FIG. 2 shows an assembly of the HV NMOS and the LV switch in FIG. 1.
FIG. 3 shows the second embodiment.
FIG. 4 shows an assembly of the HV NMOS and the LV switch in FIG. 3.
FIG. 5 shows the third embodiment.
FIG. 6 shows an assembly of the HV NMOS and the LV switch in FIG. 5.
FIG. 7 shows the simple structure for measurement.
FIG. 8 shows another simple structure for measurement.
FIG. 9 shows the drain currents of the HV NMOS for different drain voltages.

### DETAILED DESCRIPTION OF THE PREFERRED EMBODIMENTS

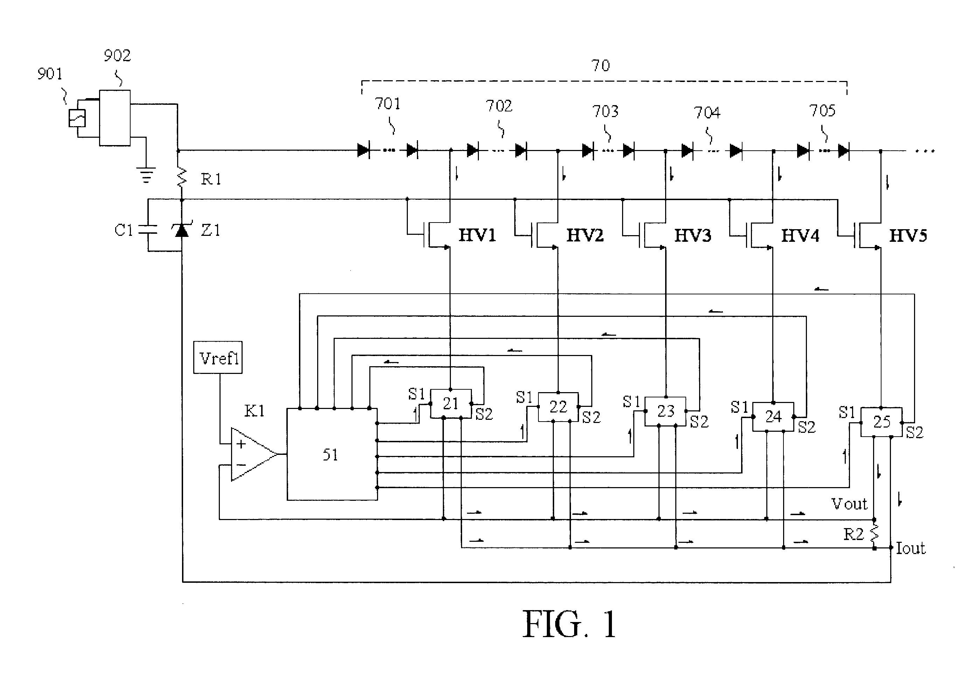

FIG. 1 shows the first embodiment of the present invention, an apparatus for controlling an **LED string 70** which includes five **LED units 701-705.** A **current input** of the LED string 70 is electrically connected to a **bridge regulator 902.** An input of the bridge regulator 902 is connected to an **AC power supply 901.** The LED string 70 can be a part of a longer LED series, and more apparatuses can be electrically connected in series to control the respective LED string. Each of the LED units includes plural LEDs. Corresponding to the LED units 701-705 with lowering of working voltages, the apparatus includes five **HV N-type devices HV1-HV5,** five **LV current limit switches 21-25** and an **external master-slave controller 51.**

In all of the preferred embodiments, the LV current limit switch is exemplified by an LV constant current switch, the N-type device is exemplified by an NMOS transistor and briefly named as an NMOS, and the master-slave controller is briefly named as the MS controller. The terms "HV" and "LV" are defined relatively according to the breakdown voltages of the devices or switches. The terms "external" and "built-in" are defined relative to the LV switches. The LV switch can be an integrated circuit (IC) including at least one LV NMOS.

In the LED string 70, each LED unit has a current output electrically connected to a drain of the corresponding HV NMOS. A source of each HV NMOS is electrically connected to the corresponding LV switch, and a gate is electrically connected to the **Zener diode Z1,** for providing a fixed bias. The Zener diode Z1 is electrically connected to the bridge regulator 902 through the **resistor R1,** and also electrically connected to the **capacitor C1** in parallel, for providing the apparatus a stable voltage.

Each of the LV switches has a signal input **S1** and a signal output **S2,** respectively connected to the corresponding signal output and signal input of the MS controller 51. Each of the LV switches also has a voltage output and a current output, respectively connected to the voltage output contact **Vout** and the current output contact **Iout** of the control apparatus. The current output contact Iout is finally connected to the Zener diode Z1. The voltage output contact Vout is further connected to current output contact Iout through the resistor **R2.**

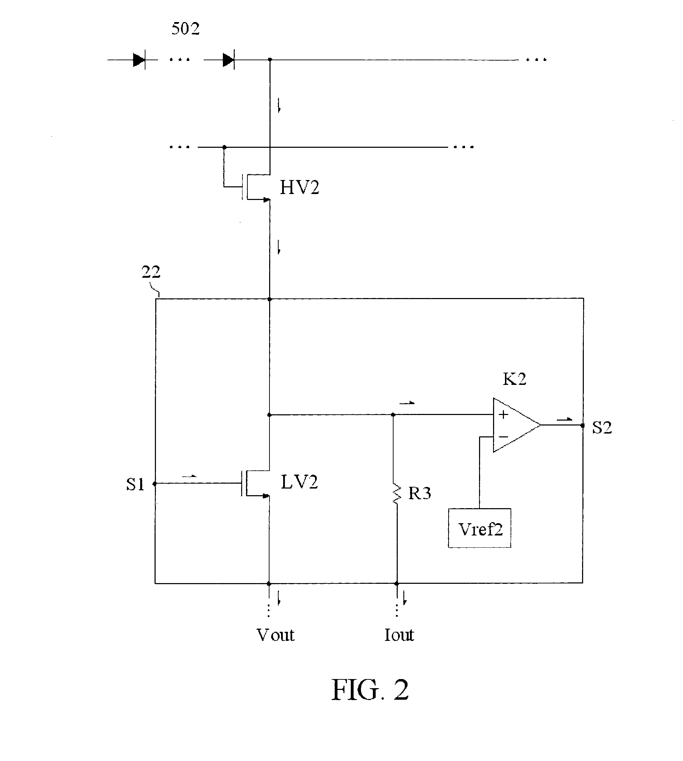

FIG. 2 further illustrates a structure including the HV NMOS and the corresponding LV switch of FIG. 1, which is exemplified by the HV NMOS HV2 and the LV switch 22. The LV switch 22 includes an **LV NMOS LV2,** a **comparator K2** and a **high-ohmic resistor R3.** The comparator K2 and the high-ohmic resistor R3 form a voltage detecting circuit. A control structure is thus formed by the voltage detecting circuit, the MS controller, the **operational amplifier (OPAMP) K1** and the required wires. A drain of the LV NMOS LV2 is connected to a source of the corresponding HV NMOS HV2, a positive input of the comparator K2 and the resistor R3. The gate is connected to the signal input S1 of the LV switch to be controlled by the signal output of the MS controller 51. The source is connected to the voltage output contact Vout. The current flows from the current output of the LED units to the LV switch 22 through the HV NMOS HV2. The resistor R3 is further connected to the current output contact Iout. A reference voltage (Vref2) set at a current limit turning point is provided to a negative input of the comparator K2. The signal output S2 of the LV switch 22 is connected to the signal input of the MS controller 51. The MS controller 51 is also connected to an output of the operational amplifier K1. A positive input of the operational amplifier K1 is connected to a reference voltage (Vref1) and a negative input thereof is connected to voltage output Vout to achieve a master-slave current limit effect with the resistor R2.

When the input voltage of the LED string 70 increases, the LV switches 21-25 are turned on in order. Once the voltage of the LV switch 22 is larger than Vref2, the comparator K2 sends a signal "High" to the MS controller 51 through the signal output S2. At the same time, if the MS controller 51 also sends a signal "High" to the signal input S1, the LV NMOS LV2 will be turned on. Then, the MS controller 51 reverses the output signal of the LV switch 22, and sends a signal (or command) to the LV switch 21 at a higher working voltage to turn off it or decrease conduction current thereof. During this process, the HV NMOS HV1-HV4 and the gate of the LV NMOS of the LV switch 25 keep in the status "ON".

Similarly, once the voltage of the LV switch 23 is a voltage larger than Vref2, the comparator K2 therein will send a signal "High" to the MS controller 51. Then, the MS controller 51 will send a signal to the LV switches 23 to turn on the switch 23, and signals (or commands) to the LV switches 21 and 22 at higher working voltages to decrease conduction current thereof or turn off them.

In contrast, when an input voltage decreases and a voltage of the LV switch 25 is less than Vref2, then comparator K2 will send a signal "Low" to the MS controller 51. Then, the MS controller 51 will reverse the signal and send a signal (or command) to the LV switch 24 to turn on it or increase conduction current thereof.

According to the above structure, one of characteristics of the present invention is that conduction current of the LV NMOS or the LV switches at higher working voltages are controlled by those at lower working voltages. In addition, whether the LED units are "ON" or "OFF" is determined by the respective LV switches but not the HV NMOS. Since the LV switches can be turned on or off faster, discrete currents of the LED series during switching can be avoided.

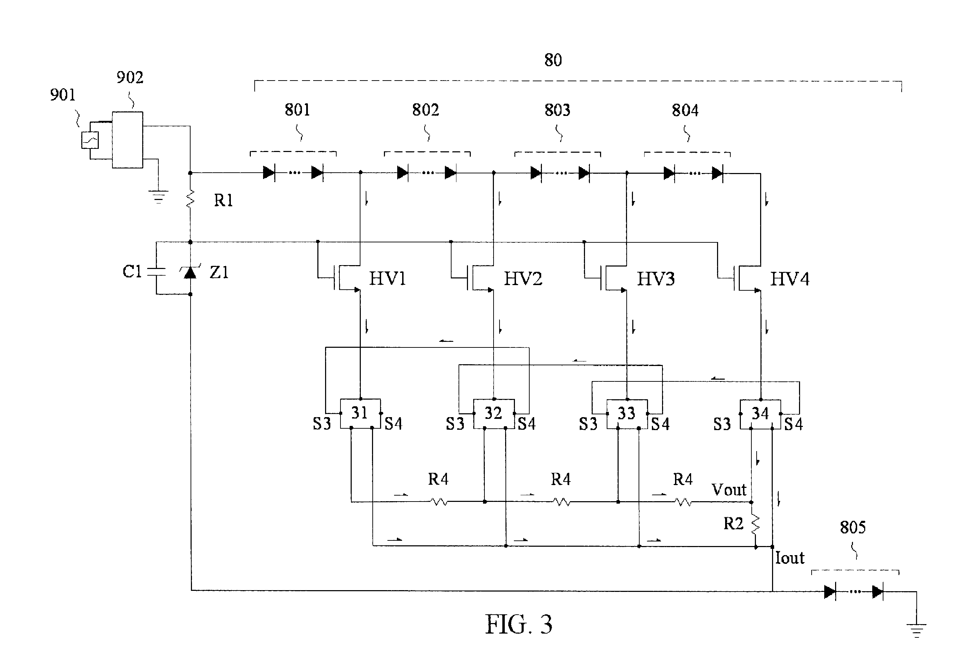

FIG. 3 shows the second embodiment of the present invention. In this embodiment, the LED string **80** includes five LED units **801-805** each of which includes several serial LED. The LED units 801-804 respectively connect corresponding HV NMOS **HV1-HV4** and LV switches **31-34, and the** LED unit 805 is grounded. Different from the first embodiment, the external MS controller 51 of this embodiment is not a specific device outside the LV switch but a distributed MS controller built in each LV switches 31-34.

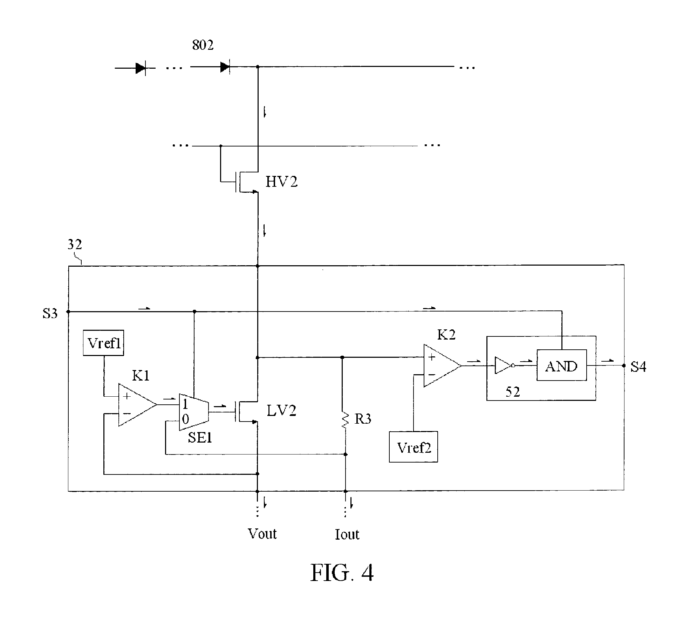

FIG. 4 shows an example, the LV switch 32, in which the comparator K2 and the high impedance resistor R3 also form a voltage detecting circuit. A control structure is formed by the voltage detecting circuit, a **distributed MS controller 52,** a **selector SE1,** the operational amplifier K1 and required wires. The distributed MS controller 52 includes an inverter and a logic element AND. The operational amplifier K1 has a positive input connected to a reference voltage Vref1, a negative input connected to a source of the LV NMOS LV2, and an output is connected to "1" input of the selector SE1. The selector SE1 is controlled by a distributed MS controller 52 built in a LV switch at a lower working voltage. If the signal input S3 receives a signal "High", the selector SE1 will be switched to an output of the operational amplifier K1. If the signal input S3 receives a signal "Low", the selector SE1 will make a gate of the LV NMOS LV2 connect to the current output contact Iout and turn off the LV NMOS LV2.

In this embodiment, when the input voltage of the LED string 80 increases, the LV switches 31-34 will be turned on sequentially. For example, when the drain voltage of the LV NMOS LV2 is larger than Vref2, the comparator K2 of the LV switch 32 will send a signal "High" to the distributed MS controller 52. At the same time, if the signal input S3 also receives a signal "High", the LV NMOS LV2 will be turned on. Then, an inverter will reverse the signal to "Low" and send the signal to the logic element AND so that the signal output S4 will send a signal "Low" to the LV switch 31 at a higher working voltage. Then, the LV switch 31 is turned off or the conduction current thereof decreases. During the control process of turning on and off, the gates of the HV NMOS HV1-HV4 and the LV NMOS of the LV switch 34 keep in the status "ON".

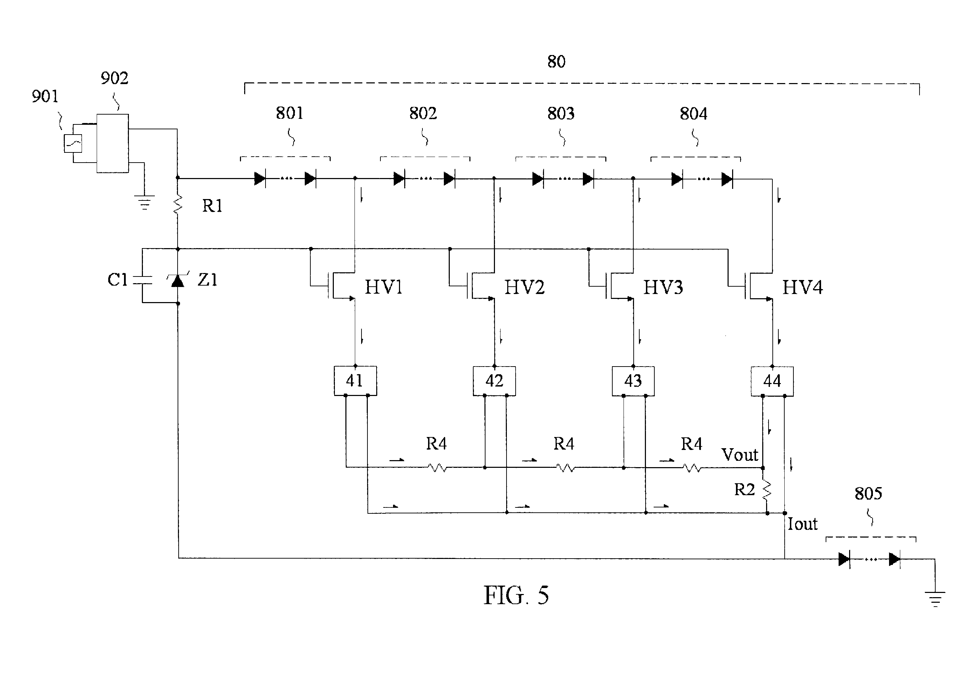

FIG. 5 shows the third embodiment of the present invention. Different from the first and the second embodiments, this embodiment includes no external MS controller and distributed MS controller in the LV switches **41-44.**

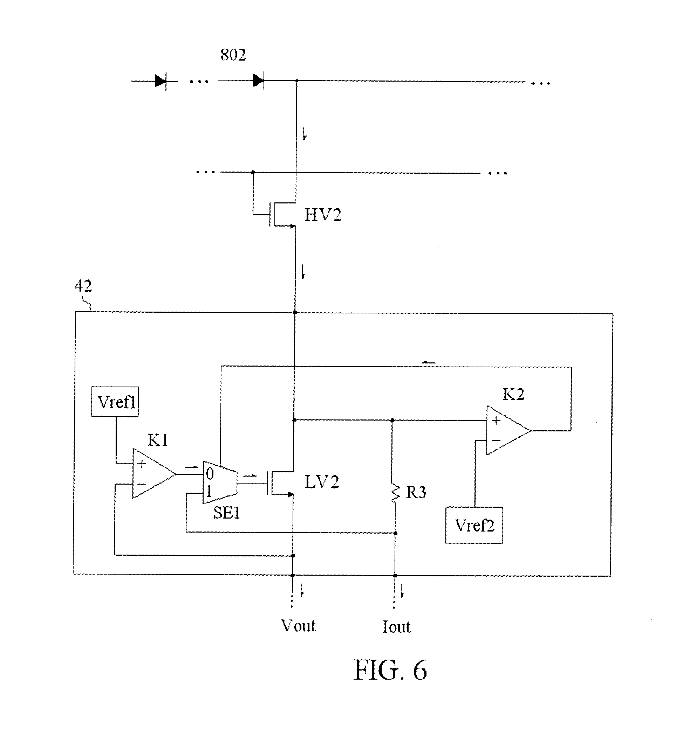

The LV switch 42 is illustrated in FIG. 6, in which the comparator K2 and the high-ohmic resistor R3 form a voltage detecting circuit. A control structure is formed by the voltage detecting circuit, the selector SE1, the operational amplifier K1 and required wires. An output of the comparator K2 is connected to the selector SE1. The selector SE1 has a "0" input connected to the output of the comparator K1 and a "1" input connected to the current output contact Iout.

When the input voltage of the LED string 80 increases and the drain voltage of the LV NMOS LV2 is larger than Vref2, the comparator K2 will send a signal "High" to a control terminal of the selector SE1, and the output of the selector SE1 is connected to the "1" input. Therefore, the gate of the LV NMOS LV2 is connected to current output contact Iout to turn off the LV switch or decrease the conduction current thereof. In contrast, if the drain of the LV NMOS LV2 has a voltage less than Vref2, the comparator K2 will send a "Low" signal to the selector SE1 so that the gate the LV NMOS LV2 is connected to an output of the operational amplifier K1 and the LV switches 42 is turned on. During the control process, the gates of the HV NMOS HV1-HV4 and the LV NMOS of the LV switch 44 keep at the status "ON".

### Measurements and Analysis:

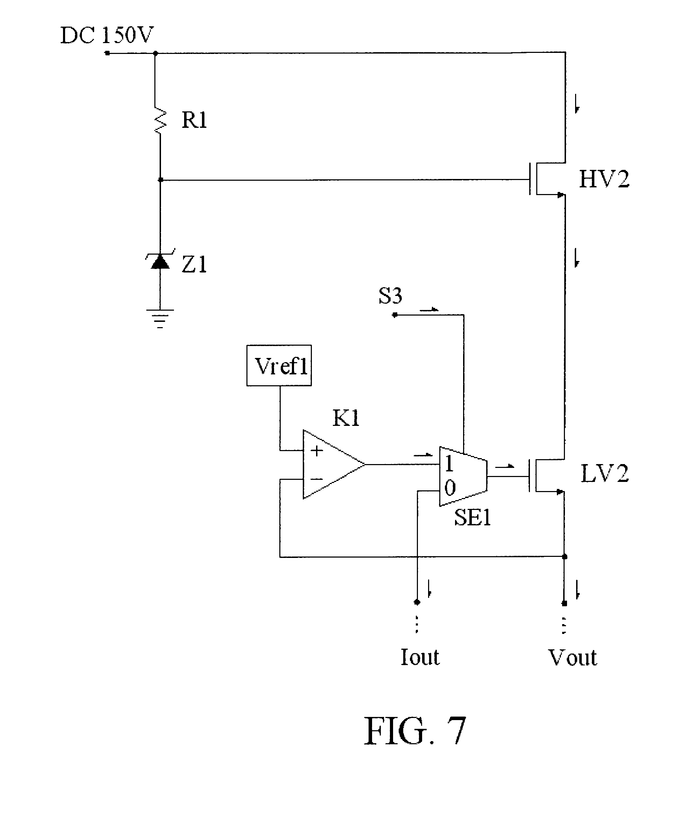

Based on the structure of the second embodiment, a simple assembly including an HV NMOS and an LV switch is measured, as shown in FIG. 7. The resistor R1 is about 200 kΩ and the Zener diode Z1 has a breakdown or withstanding voltage of about 12 V. For the HV NMOS HV2, the drain has a breakdown voltage of about 600 V and a DC voltage thereof is set as 150 V, the gate is connected to a node of the Zener diode Z1 and the resistor R1. The simplified LV switch is connected to a source of the HV NMOS HV2. A constant current (I) is set as 56 mA. The breakdown voltage of the drain of the LV NMOS LV2 is about 40 V. A fix PWM signal with a square wave (frequency = 20 kHz, duty cycle = 50 %) is sent to the signal input S3 of the LV switch. When the PWM signal is "High", the LV switch will be "ON", and when the PWM signal is "Low", the LV switch will be "OFF".

During the process of switching, noises may be caused by the drain voltage of the HV NMOS and parasitic inductance. However, the noises at the source of the HV NMOS can be always controlled below 11.5 V, less than the voltage at the gate (12 V). When the drain of the HV NMOS HV2 is instantly switched to 150 V, the LV switch connected to the source thereof can be effectively protected.

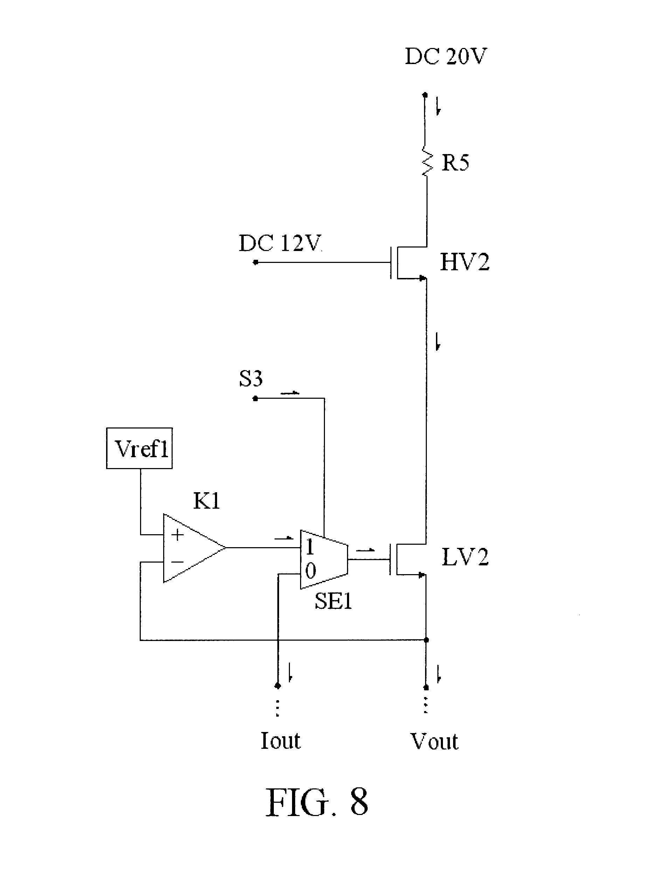

FIG. 8 shows a simple assembly similar to FIG. 7, but the drain of the HV NMOS HV2 is connected to a resistor **R5** (about 30 ohm) which is connected to a DC source (20V), and the gate thereof has a fixed voltage (12 V). When the switching time is about 14 us, the predetermined current (56 mA) can be achieved and kept constant. The time for turning off is less than about 2 us so that the HV NMOS can be equivalently and fast switched.

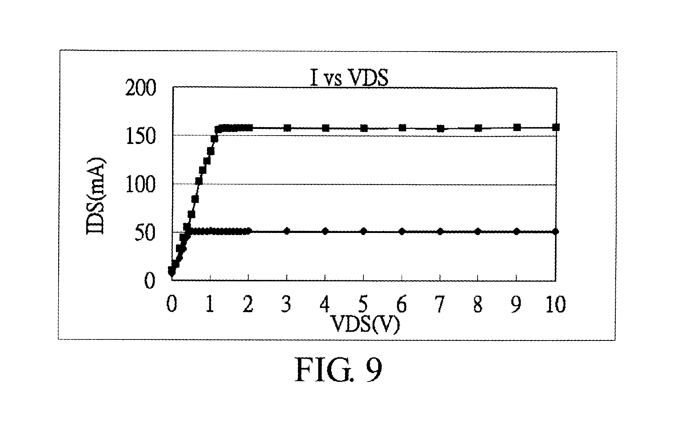

The LV switch has two constant current values (56 mA and 156 mA). FIG. 9 shows the relationships of currents and voltages at the drain of the HV NMOS. When the voltage of the HV NMOS is higher than the knee-point voltage (V_{Knee-Point} = 0.6 V or 1.3 V), the current will be kept at the constant current, and the voltage at the drain of the LV NMOS increases with the that at the drain of the HV NMOS. Difference between these two voltages is only about 0.4 V.

In another measurement, a structure as shown in FIG. 3 includes 52 LEDs is used, wherein the LED units 801 includes six LEDs, each of the LED units 802-804 includes thirteen LEDs, and the LED units 805 includes seven LEDs. Each LED has a Vf of about 3 V. The voltage input at the AC end is 110V and has a peak of 155 V. The gates of all four HV NMOS HV1-HV4 are connected to an anode of the Zener diode Z1 to generate a fixed DC voltage of 36 V. A source of each HV NMOS corresponds to an LV switch. Particularly, the contact Iout having the lowest voltage of the circuit is connected to a current input of the last LED unit 805 so that energy utilization will be optimized. The output current linearly increases with the input voltage. The largest output current is 80 mA and an output power is about 6.23 W (= 110 V×80/√2 mA). When the input voltage has a peak value larger than 42 V, the six LEDs of the LED unit 801 and the seven LEDs of the LED unit 805 are "first and simultaneously" lit. By means of such design, entire brightness of a lighting lamp or fixture will be evener. According to the above measurements, photoelectric effects are calculated as follows:
Power Factor Correction (PFC) = 0.98
Total Harmonic Distortion (THD) = 12%
Luminous Flux = 120 Im/W

Characteristics and advantages of the present invention also can be summarized as follows:
1. Since the voltage at the source of the HV N-type device is equivalent to that at the drain or the output of the LED unit, detection on the path having a higher working voltage is not necessary and the structure will be simplified.
2. The current of the high voltage LED can be controlled by switching the LV switch so that the LED can be turned on and off faster, which takes advantages such as stabilizing the current in the system, keeping the input current continuous, reducing electromagnetic interference (EMI) and decreasing the total harmonic distortion.
3. The layout will be simpler since connection or wiring between common gates and sources of traditional vertical HV N-type devices and other elements in the control apparatus can be simplified.
4. By connecting the ungrounded apparatus and a long LED string in parallel, power consumption on wires can be decreased and 120 Hz ripple flickering can be avoided.

## Claims

1. An apparatus for controlling an LED string which includes a plurality of LED units in series; comprising:
a plurality of high voltage (HV) N-type devices, each of which electrically connects to a current output of the corresponding LED unit; and
a plurality of low voltage (LV) current limit switches, each of which electrically connects to the corresponding HV N-type device in series and electrically connects to the corresponding LED unit in parallel so that a current flows from the HV N-type device to the corresponding LV current limit switch;
wherein the LED unit includes one or several LEDs arranged in series or in parallel, and the terms "HV" and "LV" are defined relatively according to the breakdown voltages of the devices or the switches.

2. The apparatus of claim 1, wherein the LED string is grounded or ungrounded.

3. The apparatus of claim 1, wherein the N-type device is an N-type metal-oxide-semiconductor (NMOS) transistor or a NPN bi-polar transistor.

4. The apparatus of claim 1, a conduction current flowing through the HV N-type device increases or decreases with that flowing through the corresponding LV current limit switch.

5. An apparatus for controlling an LED string which includes a plurality of LED units in series; comprising:
a plurality of high voltage (HV) N-type devices, each of which electrically connects to a current output of the corresponding LED unit; and
a plurality of low voltage (LV) current limit switches, each of which electrically connects to the corresponding HV N-type device and electrically connects to the corresponding LED unit in parallel so that a currents flows from the HV N-type device to the corresponding LV current limit switch;
wherein each of the LED units includes one or several LEDs arranged in series or in parallel, and the terms "HV" and "LV" are defined relatively according to the breakdown voltages of the devices or the switches;
accordingly, when the currents input to the LV current limit switches increase, the LV current limit switch at the lowest working voltage will be turned on, then the conduction currents flowing through the other LV current limit switches at higher working voltages and their corresponding HV N-type devices will decrease.

6. The apparatus of claim 5, wherein the LED string is grounded or ungrounded.

7. The apparatus of claim 5, wherein the N-type device is an N-type metal-oxide-semiconductor (NMOS) transistor or a NPN bi-polar transistor.

8. The apparatus of claim 5, further comprising a master-slave controller for judging if the LV current limit switch should be turned on or the current flowing through it should be decreased, wherein the master-slave controller is external to or built in the LV current limit switch.

9. An apparatus for controlling an LED string which includes a plurality of LED units in series; comprising:
a plurality of high voltage (HV) N-type devices, each of which electrically connects to a current output of the corresponding LED unit; and
a plurality of low voltage (LV) current limit switches, each of which electrically connects to the corresponding HV N-type device and electrically connects to the corresponding LED unit in parallel so that a current flows from the HV N-type device to the corresponding LV current limit switch;
wherein each of the LED units includes one or several LEDs arranged in series or in parallel, and the terms "HV" and "LV" are defined relatively according to the breakdown voltages of the devices or the switches;
accordingly, when the LV current limit switch at higher working voltage receives a signal "decreasing current" from the LV current limit switch at a lower working voltage, the conduction currents of the other LV current limit switches at higher working voltages and their corresponding HV N-type devices will decrease.

10. The apparatus of claim 9, wherein the LED string is grounded or ungrounded.

11. The apparatus of claim 9, wherein the N-type device is an N-type metal-oxide-semiconductor (NMOS) transistor or a NPN bi-polar transistor.

12. The apparatus of claim 9, wherein the LV current limit switch at a higher working voltage receives the signal "decreasing current" from the LV current limit switch at a lower working voltage through a master-slave controller.

13. An apparatus for controlling an LED string which includes a plurality of LED units in series; comprising:
at least one high voltage (HV) N-type device which electrically connects to a current output of the corresponding LED units; and
at least one low voltage (LV) current limit switch which electrically connects to the corresponding HV N-type device and electrically connects to the corresponding LED unit in parallel so that a current flows from the HV N-type device to the corresponding LV current limit switch;
at least one voltage or current detect circuit for detecting voltage or current on a path from the corresponding LED unit to the corresponding LV current limit switch;
wherein each of the LED units includes one or several LEDs arranged in series or in parallel and the terms "HV" and "LV" are defined relatively according to the breakdown voltages of the devices or the switches;
accordingly, when the detected voltage or current is higher than a predetermined value, the corresponding LV current limit switch will be turned off, and when the detected voltage or current is lower than a predetermined value, the corresponding LV current limit switch will be turned on.

14. The apparatus of claim 13, wherein the LED string is grounded or ungrounded.

15. The apparatus of claim 13, wherein the N-type device is an N-type metal-oxide-semiconductor (NMOS) transistor or a NPN bi-polar transistor.
